# EUROPEAN PATENT SPECIFICATION

(11) **EP 1 678 077 B1**
(45) Date of publication and mention of the grant of the patent: **26.08.2009**
(21) Application number: 04810338.6
(22) Date of filing: 05.11.2004
(51) Int. Cl.: C01B 7/19, C01B 7/24

(54) **AZEOTROPIC COMPOSITION OF IODINE HEPTAFLUORIDE AND HYDROGEN FLUORIDE**
AZEOTROPISCHE ZUSAMMENSETZUNGEN VON IODHEPTAFLUORID UND FLUORWASSERSTOFF
COMPOSITION AZEOTROPIQUE D'HEPTAFLUORURE D'IODE ET DE FLUORURE D'HYDROGENE

(30) Priority: 05.11.2003 US 701574
(43) Date of publication of application: 12.07.2006
(73) Proprietor: Honeywell International Inc., Morristown NJ 07960 (US)
(72) Inventor: LULY, Matthew, H., Hamburg, NY 14075 (US); SINGH, Rajiv, R., Getzville, NY 14068 (US); COOK, George, R., Buffalo, NY 14223 (US)
(74) Representative: Hucker, Charlotte Jane
(86) International application number: PCT/US2004/036815
(87) International publication number: WO 2005/044726

(56) References cited:
- WO-A-02/098529
- US-A- 6 147 006

## Description

### FIELD OF THE INVENTION

The present invention pertains to azeotropic and azeotrope-like compositions of iodine heptafluoride and hydrogen fluoride.

### BACKGROUND

There is a need for fluorinating agents of various strengths. Iodine heptafluoride has been found to be a more active fluorinating agent than iodine pentafluoride, but less active than elemental fluorine. Iodine heptafluoride has also been used the manufacture of semiconductors (for example US 5,362,350). Semiconductor fabrication requires high purity chemicals. Iodine heptafluoride is difficult to make as a pure material.

It is known that iodine pentafluoride and HP do not form an azeotrope (M. Rogers, J. Speirs, M. Panish, and H. Thompson, Journal of the American Chemical Society, 78, 936 [1956]). It is therefore surprising to find that an azeotropic or azeotrope-like mixture of iodine heptafluoride and hydrogen fluoride does exist. The azeotropic and azeotrope-like composition of iodine heptafluoride and hydrogen fluoride finds application in purifying iodine heptafluoride.

### SUMMARY OF THE INVENTION

In one embodiment, the invention provides an azeotropic composition consisting essentially of iodine heptafluoride and hydrogen fluoride.

The invention further provides an azeotropic or azeotrope-like composition consisting essentially of from about 1 to about 28 weight percent hydrogen fluoride and from about 72 to about 99 weight percent iodine heptafluoride, which composition has a boiling point of from about 5°C to about 50°C at a pressure of from about 124 kPa (18 psia) to about 862 kPa (125 psia).

In another embodiment, the invention provides a method of forming an azeotropic or azeotrope-like composition, which method comprises blending from about 1 to about 28 weight percent hydrogen fluoride and from about 72 to about 99 weight percent of iodine heptafluoride, which composition has a boiling point of from about 5°C to about 50°C at a pressure of from about 124 kPa (18 psia) to about 862 kPa (125 psia).

In still another embodiment, the invention provides a process for removing HF and/or iodine heptafluoride from a mixture containing at least HF and iodine heptafluoride by separating the azeotropic or azeotrope-like composition of HF and iodine heptafluoride from the remaining material.

### BRIEF DESCRIPTION OF THE DRAWINGS

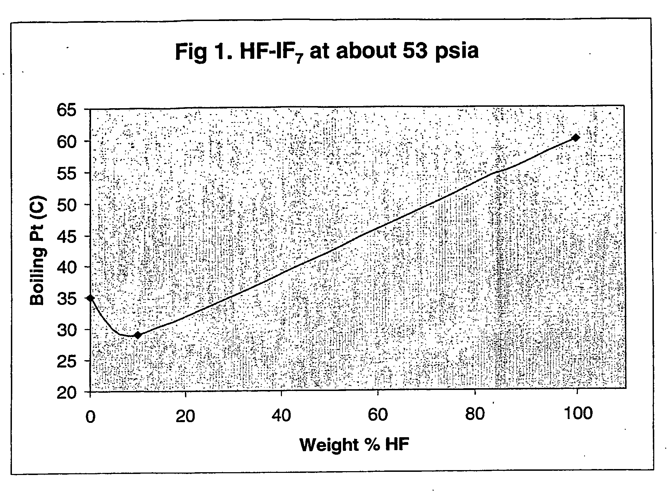

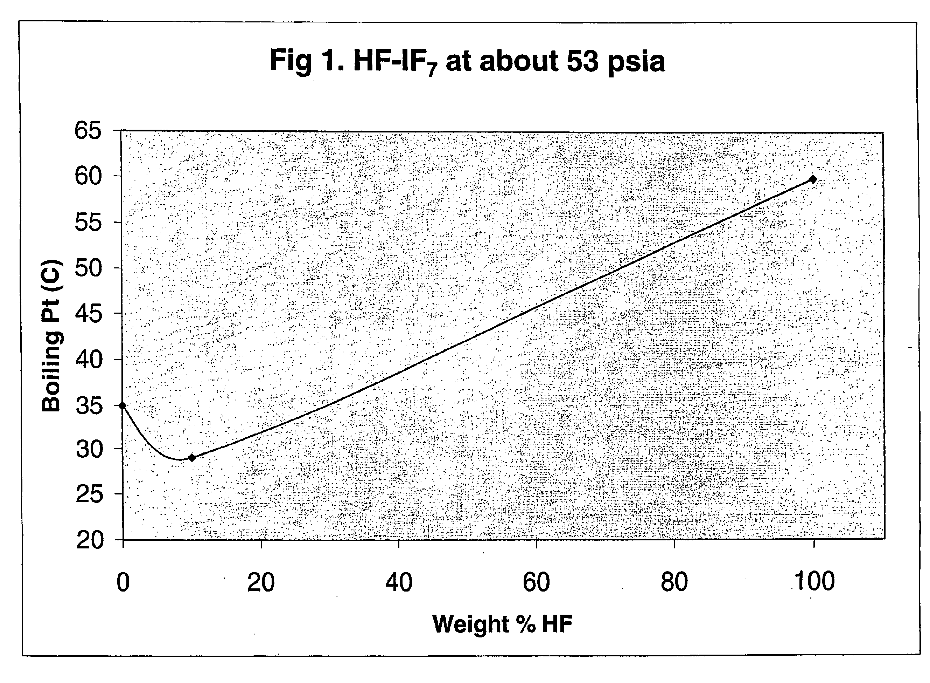

Figure 1 is a boiling point curve showing the boiling point of the azeotrope or azeotrape-like composition is lower than either the boiling point of HF or the boiling point of iodine heptafluoride.

### DETAILED DESCRIPTION OF THE PREFERRED EMBODIMENT

In a method of preparing iodine heptafluoride, precursor reagents are fluorinated with elemental fluorine. The reaction products of such precursors include iodine heptafluaride, unreacted fluorine and other precursors, and other by-products or contaminants. It is common for commercial fluorine to contain traces of HF, CF₄, and other compounds Additionally, iodine heptafluoride can react with traces of water to make hydrogen fluoride and other contaminants. Whatever the source, iodine heptafluoride contaminated with HF is not acceptable for many applications. The azeotrope or azeotrope-like compositions of iodine heptafluoride and are useful for removing the HF from a sample, and obtaining HF-free iodine heptafluoride. It is also possible to use the azeotrope or azeotrope-like compositions of iodine heptafluoride and HF to remove iodine heptafluoride from a sample HF.

The thermodynamic state of a fluid is defined by its pressure, temperature, liquid composition and vapor composition. For a true azeotropic composition, the liquid composition and vapor phase are essentially equal at a given temperature and pressure range. In practical terms this means that the components cannot be separated during a phase change. For the purpose of this invention, an azeotrope-like composition means that the composition behaves like a true azeotrope in terms of its constant boiling characteristics and tendency not to fractionate upon boiling or evaporation. During boiling or evaporation, the liquid composition changes only slightly, if at all. This is in contrast with non-azeotrope-like compositions in which the liquid and vapor compositions change substantially during evaporation or condensation. One way to determine whether a candidate mixture is azeotrope-like within the meaning of this invention, is to distill a sample of it under conditions which would be expected to separate the mixture into its separate components. If the mixture is a non-azeotrope or non-azeotrope-like, the mixture will fractionate, i.e. separate into its various components with the lowest boiling component distilling off first, and so on. If the mixture is azeotrope-like, some finite amount of the first distillation cut will be obtained which contains all of the mixture components and which is constant boiling or behaves like a single substance. Another characteristic of azeotrope-like compositions is that there is a range of compositions containing the same components in varying proportions that are azeotrope-like. All such compositions are included by the term azeotrope-like as used herein. As an example, it is well known that at different pressures the composition of a given azeotrope will vary at least slightly as does the boiling point of the composition. Thus an azeotrope of two components represents a unique type of relationship but with a variable composition depending on the temperature and/or pressure. As is well known in the art, the boiling point of an azeotrope will vary with pressure.

As used herein, an azeotrope is a liquid mixture that exhibits a maximum or minimum boiling point relative to the boiling points of surrounding mixture compositions. An azeotrope or an azeotrope-like composition is an admixture of two or more different components which, when in liquid form under given pressure, will boil at a substantially constant temperature, which temperature may be higher or lower than the boiling temperatures of the components and which will provide a vapor composition essentially identical to the liquid composition undergoing boiling. For the purpose of this invention, azeotropic compositions are defined to include azeotrope-like compositions which means a composition that behaves like an azeotrope, i.e., has constant-boiling characteristics or a tendency not to fractionate upon boiling or evaporation. Thus, the composition of the vapor formed during boiling or evaporation is the same as or substantially the same as the original liquid composition. Hence, during boiling or evaporation, the liquid composition, if it changes at all, changes only to a minimal or negligible extent. This is in contrast with non-azeotrope-like compositions in which during boiling or evaporation, the liquid composition changes to a substantial degree. Accordingly, the essential features of an azeotrope or an azeotrope-like composition are that at a given pressure, the boiling point of the liquid composition is fixed and that the composition of the vapor above the boiling composition is essentially that of the boiling liquid composition, i.e., essentially no fractionation of the components of the liquid composition takes place. Both the boiling point and the weight percentages of each component of the azeotropic composition may change when the azeotrope or azeotrope-like liquid composition is subjected to boiling at different pressures. Thus, an azeotrope or an azeotrope-like composition may be defined in terms of the relationship that exists between its components or in terms of the compositional ranges of the components or in terms of exact weight percentages of each component of the composition characterized by a fixed boiling point at a specified pressure.

The present invention provides a composition comprising effective amounts of hydrogen fluoride and iodine heptafluoride to form an azeotropic or azeotrope-like composition. By effective amount is meant an amount of each component which, when combined with the other component, results in the formation of an azeotrope or azeotrope-like mixture. The inventive compositions preferably are binary azeotropes that consist essentially of combinations of only hydrogen fluoride with iodine heptafluoride.

In the preferred embodiment, the inventive composition contains from about 1 to about 28 weight percent HF, preferably from about 2 weight percent to about 24 weight percent and most preferably from about 4 weight percent to about 20 weight percent. In the preferred embodiment, the inventive composition contains from about 72 to about 99 weight percent iodine heptafluoride, preferably from about 76 weight percent to about 98 weight percent and most preferably from about 80 weight percent to about 96 weight percent. The composition of the present invention has a boiling point of from about 5°C to about 50°C at a pressure of from about 124 kPa (18 psia) to about 862 kPa (125 psia). An azeotropic or azeotrope-like composition having about 10 weight percent HF and about 90 weight percent iodine heptafluoride has been found to boil at about 28°C and 365 kPa (53 psia).

In another preferred embodiment of the invention, HF may be removed from a mixture containing at least HF and iodine heptafluoride by removal of the azeotropic composition of HF and iodine heptafluoride for example by distillation other art recognized separating means.

The following non-limiting examples serve to illustrate the invention.

### EXAMPLE 1

714 g of crude iodine heptafluoride and 50 g of HF were mixed at about 19 °C to give a pressure of about 241 kPa (35 psia).

### EXAMPLE 2

711 g of crude iodine heptafluoride and 48 g HF were mixed at about 20.3 °C to give a pressure of about 246 kPa (35.7 psia).

### EXAMPLE 3

278 g of crude iodine heptafluoride containing small quantities of HF and 851 g of a mixture (approximately 25% iodine heptafluoride and 75% iodine pentafluoride) was distilled. The temperature and vapor pressure were measured and the composition of the vapor phase was determined by Fourier transform infrared spectroscopy The constant azeotropic or azeotrope-like composition of the overhead stream was about 10 wt% HF and about 90wt % iodine heptafluoride. This is plotted in Figure 1. Note that the boiling point of HF is about 60 °C at about 365 kPa (53 psia) and that of iodine heptafluoride is about 34°C at about 365 kPa (53 psia). From this figure it is observed that the boiling point of the HF-IF₇ mixture is lower than the boiling point of each individual component. From this example it is determined that the azeatropic composition is about 10 wt % HF and 90 wt % iodine heptafluoride.

## Claims

1. An azeotropic composition consisting essentially of iodine heptafluoride (IF₇) and hydrogen fluoride (HF).

2. An azeotropic composition according to claim 1 consisting essentially of from about 1 to about 28 weight percent HF and from about 72 to about 99 weight percent IF₇. which has a boiling point of from about 5°C about 50°C at a pressure of from about 124 kPa (18 psia) to about 862 kPa (125 psia).

3. An azeotropic composition according to claim 2 consisting essentially of from about 2 to about 24 weight percent HF and from about 76 to about 98 weight percent IF₇.

4. An azeotropic composition according to claim 3 consisting essentially of from about 4 to about 20 weight percent HF and from about 80 to about 96 weight percent IF_{7.}

5. A method for producing an azeotropic composition consisting essentially of blending from about 1 to about 28 weight percent HF and from about 72 to about 99 weight percent IF₇, which composition has a boiling point of from about 5°C to about 50°C at a pressure of from about 124 kPa (18 psia) to about 862 kPa (125 psia).

6. A method for removing a compound selected from the group consisting of HF, IF₇, and combinations thereof from a mixture containing at least HF and IF, said method comprising:
providing a mixture comprising a compound selected from the group consisting of HF, IF₇ and combinations thereof;
and
distilling said mixture to remove an azeotropic composition as defined in claim 1.

## Patentansprüche

1. Azeotrope Zusammensetzung, im wesentlichen bestehend aus Iodheptafluorid (IF₇) und Fluorwasserstoff (HF).

2. Azeotrope Zusammensetzung nach Anspruch 1, im wesentlichen bestehend aus etwa 1 bis etwa 28 Gewichtsprozent HF und etwa 72 bis etwa 99 Gewichtsprozent IF₇, die einen Siedepunkt von etwa 5°C bis etwa 50°C bei einem Druck von etwa 124 kPa (18 psia) bis etwa 862 kPa (125 psia) aufweist.

3. Azeotrope Zusammensetzung nach Anspruch 2, im wesentlichen bestehend aus etwa 2 bis etwa 24 Gewichtsprozent HF und etwa 76 bis etwa 98 Gewichtsprozent IF₇.

4. Azeotrope Zusammensetzung nach Anspruch 3, im wesentlichen bestehend aus etwa 4 bis etwa 20 Gewichtsprozent HF und etwa 80 bis etwa 96 Gewichtsprozent HF₇.

5. Verfahren zur Herstellung einer azeotropen Zusammensetzung, bei dem man im wesentlichen etwa 1 bis etwa 28 Gewichtsprozent HF und etwa 72 bis etwa 99 Gewichtsprozent IF₇ mischt, wobei die Zusammensetzung einen Siedepunkt von etwa 5°C bis etwa 50°C bei einem Druck von etwa 124 kPa (18 psia) bis etwa 862 kPa (125 psia) aufweist.

6. Verfahren zur Entfernung einer Verbindung aus der Gruppe bestehend aus HF, IF₇ und Kombinationen davon aus einem zumindest HF und IF₇ enthaltenden Gemisch, bei dem man:
ein Gemisch bereitstellt, das eine Verbindung aus der Gruppe bestehend aus HF, IF₇ und Kombinationen davon umfaßt; und
das Gemisch zur Entfernung einer azeotropen Zusammensetzung gemäß Anspruch 1 destilliert.

## Revendications

1. Composition azéotropique essentiellement composée d'heptafluorure d'iode (IF₇) et de fluorure d'hydrogène (HF).

2. Composition azéotropique selon la revendication 1 essentiellement composée d'environ 1 à environ 28 pour cent en poids de HF et d'environ 72 à environ 99 pour cent en poids de IF₇, qui a un point d'ébullition d'environ 5°C à environ 50°C à une pression d'environ 124 kPa (18 psia) à environ 862 kPa (125 psia).

3. Composition azéotropique selon la revendication 2 essentiellement composée d'environ 2 à environ 24 pour cent en poids de HF et d'environ 76 à environ 98 pour cent en poids de IF₇.

4. Composition azéotropique selon la revendication 3 essentiellement composée d'environ 4 à environ 20 pour cent en poids de HF et d'environ 80 à environ 96 pour cent en poids de IF₇.

5. Procédé pour produire une composition azéotropique consistant essentiellement à mélanger environ 1 à environ 28 pour cent en poids de HF et environ 72 à environ 99 pour cent en poids de IF₇, laquelle composition a un point d'ébullition d'environ 5°C à environ 50°C à une pression d'environ 124 kPa (18 psia) à environ 862 kPa (125 psia).

6. Procédé pour retirer un composé choisi dans le groupe constitué par HF, IF₇ et les combinaisons de ceux-ci d'un mélange contenant au moins du HF et du IF₇, ledit procédé comprenant :
l'obtention d'un mélange comprenant un composé choisi dans le groupe constitué par HF, IF₇ et les combinaisons de ceux-ci ; et
la distillation dudit mélange pour retirer une composition azéotropique telle que définie dans la revendication 1.
